(19)

**Europäisches Patentamt**
**European Patent Office**
**Office européen des brevets**

(11) **EP 4 031 845 B1**

(12) **EUROPÄISCHE PATENTSCHRIFT**

(45) Veröffentlichungstag und Bekanntmachung des Hinweises auf die Patenterteilung:
**05.03.2025   Patentblatt 2025/10**

(21) Anmeldenummer: **19773077.3**

(22) Anmeldetag: **20.09.2019**

(51) Internationale Patentklassifikation (IPC):
**G01L 21/32** (2006.01)   **G01L 21/34** (2006.01)
**H01J 41/06** (2006.01)

(52) Gemeinsame Patentklassifikation (CPC):
**G01L 21/32; G01L 21/34; H01J 41/06**

(86) Internationale Anmeldenummer:
**PCT/EP2019/075367**

(87) Internationale Veröffentlichungsnummer:
**WO 2021/052599 (25.03.2021 Gazette 2021/12)**

(54) **VERFAHREN ZU BESTIMMUNG EINES DRUCKS UND DRUCKSENSOR**

METHOD FOR DETECTING PRESSURE, AND PRESSURE SENSOR

DISPOSITIF POUR DÉTERMINER UNE PRESSION ET CAPTEUR DE PRESSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.07.2022   Patentblatt 2022/30**

(73) Patentinhaber: **Inficon AG**
**9496 Balzers (LI)**

(72) Erfinder:
• STRIETZEL, Carsten
  6800 Feldkirch (AT)
• WÄLCHLI, Urs
  7000 Chur (CH)
• KAISER, Stefan
  9487 Gamprin (LI)
• RIESCH, Christian
  6706 Bürs (AT)
• ANDREAUS, Bernhard
  8640 Rapperswil (CH)
• WEDER, Mario
  7310 Bad Ragaz (CH)

(74) Vertreter: **Troesch Scheidegger Werner AG**
**Schwäntenmos 14**
**8126 Zumikon (CH)**

(56) Entgegenhaltungen:
WO-A1-2019/162681     CH-A1- 707 685
US-B1- 6 351 131

• C. C. KLEPPER ET AL: "Application of a species-selective Penning gauge to the measurement of neon and hydrogen-isotope partial pressures in the plasma boundary", REVIEW OF SCIENTIFIC INSTRUMENTS., vol. 68, no. 1, 1 January 1997 (1997-01-01), US, pages 400 - 403, XP055698770, ISSN: 0034-6748, DOI: 10.1063/1.1147839

EP 4 031 845 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft ein Verfahren zur Bestimmung eines Drucks in einem Vakuumsystem, einen Vakuum-Drucksensor, eine Vorrichtung zur Ausführung des Verfahrens, eine Anwendung des Verfahrens, sowie eine Verwendung des Drucksensors.

Vakuum-Drucksensoren oder Vakuummeter mit denen Drücke deutlich unterhalb von Normaldruck bestimmt werden können, sind bekannt. Unter den bekannten Vakuum-Drucksensoren haben sogenannte Ionisationsvakuummeter einen besonders weiten Messbereich. Sie messen Druck über den Umweg der Gasionisation. Bestimmt wird zunächst die Ionisierbarkeit des Restgases und damit die Gasdichte im Vakuumsystem. Die zur Ionisation des Gases erforderlichen Elektronen werden entweder durch eine Glühkathode (Glühkathoden-Ionisationsvakuummeter) oder in einer selbständigen Gasentladung zwischen kalten Elektroden (Kaltkathoden-Vakuummeter) erzeugt. Da die selbständige Gasentladung zwischen kalten Elektroden bei Drücken um $10^{-3}$ mbar erlöscht, wurde durch die Anordnung gemäss Patentschrift DE 716 712 von F. M. PENNING durch Verwendung eines Magnetfeldes, das die Elektronenbahnen in der selbständigen elektrischen Gasentladung wesentlich verlängert und damit die Ionenausbeute erhöht, der Messbereich der Kaltkathoden-Ionisationsmanometer zu Drücken im Hochvakuumbereich ausgedehnt. Diese Penning-Vakuummeter sind weit verbreitet und wurden über die Jahre technisch weiter verbessert. Heutzutage häufig verwendet ist die von HOBSON und REDHEAD (Redhead, P, A, (1959), The magnetron gauge, a cold cathode vacuum gauge, Can. J. Phys. 37, 1260-1271) vorgeschlagene Konfiguration in der Form eines invertierten Magnetrons. Dieses vermag einen Druckbereich von etwa $10^{-3}$ mbar bis in den Ultrahochvakuumbereich abzudecken. Penning-Vakuummetern, sowie Kaltkathoden-Vakuummetern basierend auf einer Magnetron- oder einer invertierten Magnetron-Anordnung ist gemeinsam, dass ein elektrisches Feld im Wesentlichen senkrecht zu einem magnetischen Feld steht.

Ein weiterer Vakuumdrucksensor ist aus US 6 351 131 B1 bekannt.

Eines der Hauptprobleme der bekannten Konfigurationen ist die Begrenzung des Druckbereiches hin zu hohen Drücken. Aufgrund einer Änderung des dominanten Anteils in der Entladung ergibt sich in der Strommessung eine Doppeldeutigkeit. Ursache dafür ist die Tatsache, dass zum gemessenen Strom sowohl Elektronen als auch Ionen beitragen. Abhängig vom Druck ändert sich die Natur des entstehenden Plasmas. Eine typische Druck-Strom-Kalibrationskurve eines Kaltkathoden-Vakuumeters weist für Drücke unterhalb von ca. $10^{-3}$ mbar einen Bereich auf, in dem der Strom mit zunehmendem Druck monoton ansteigt. Dies ist der nutzbare Messbereich, in dem der Druck eindeutig aus einem gemessenen Strom bestimmt werden kann. In diesem Bereich dominieren Ringströme mit Elektronen. Die Druck-Strom-Kalibrationskurve weist typischerweise ein Stromstärke-Maximum bei ca. $10^{-2}$ mbar auf. Bei Drücken oberhalb dieses Maximums sinkt der Strom mit steigendem Druck. In diesem Druckbereich dominiert das Plasma, d.h. das Gemisch von Elektronen und positiv geladenen Ionen. Konventionell kann der nutzbare Messbereich nicht über das genannte Stromstärke-Maximum hinaus ausgedehnt werden.

Die Aufgabe der vorliegenden Erfindung bestand darin, gegenüber dem Stand der Technik verbesserte Verfahren zur Bestimmung eines Vakuumdruck zu finden. Weiter bestand eine Aufgabe der vorliegenden Erfindung darin, einen alternativen Vakuum-Drucksensor, namentlich mit vergrössertem nutzbarem Messbereich zur Verfügung zu stellen.

Erfindungsgemäss wird diese Aufgabe durch ein Verfahren nach Anspruch 1 gelöst.

Das erfindungsgemässe Verfahren ist ein Verfahren zur Bestimmung eines Drucks in einem Vakuumsystem. Das Verfahren umfasst die folgenden Schritte:

  a) Erzeugen eines Plasmas in einem Probenraum, welcher mit dem Vakuumsystem fluiddynamisch verbunden ist und wobei das Plasma mit einer ersten Elektrode und einer zweiten Elektrode in elektrischem Kontakt steht;
  b) Messen einer Stromstärke eines elektrischen Stromes, der zwischen der ersten Elektrode und der zweiten Elektrode durch das Plasma hindurch fliesst;
  c) Messen einer ersten Strahlungsintensität von aus dem Plasma emittierter elektromagnetischer Strahlung eines ersten Wellenlängenbereichs, wobei der erste Wellenlängenbereich mindestens eine erste Emissionslinie einer ersten Plasmaspezies eines ersten chemischen Elements enthält;
  d) Messen einer zweiten Strahlungsintensität von aus dem Plasma emittierter elektromagnetischer Strahlung eines zweiten Wellenlängenbereichs, wobei der zweite Wellenlängenbereich eine zweite Emissionslinie der ersten Plasmaspezies des ersten chemischen Elements oder einer zweiten Plasmaspezies des ersten chemischen Elements enthält, und wobei die zweite Emissionslinie ausserhalb des ersten Wellenlängenbereichs liegt; und
  e) Bestimmen des Drucks im Vakuumsystem als Funktion der gemessenen Stromstärke, der gemessenen ersten Strahlungsintensität und der gemessenen zweiten Strahlungsintensität.

Mit dem erzeugten Plasma entstehen elektromagnetische Strahlung und geladene Teilchen. Anhand der im Plasma erzeugten geladenen Teilchen kann die Teilchendichte im Probenraum bestimmt werden, indem man einen im Plasma fliessenden Strom mittels eines Stromstärkemessgeräts misst. Aus der Teilchendichte im Probenraum kann auf den Druck im Probenraum geschlossen werden. Der Probenraum ist fluiddynamisch mit dem Vakuumsystem verbunden, so dass ein Druckausgleich zwischen Vakuumsystem und Probenraum stattfindet und der im Probenraum bestimmte Druck mit dem Druck im Vakuumsystem übereinstimmt. Der Probenraum erstreckt sich so zwischen den voneinander isolierten Elektroden, dass ein im Probenraum erzeugtes Plasma sowohl im Kontakt mit der ersten Elektrode als auch im Kontakt mit der zweiten Elektrode stehen kann. Das Stromstärkemessgerät kann irgendein Ladungsratenmesser, z.B. ein Amperemeter oder ein Elektronenzähler, sein. Verschiedenste Plasmaquellen kommen für die Erzeugung des Plasmas in Frage. Elektron-Zyklotron-Resonanz Ionenquellen (electron cyclotron resonance, ECR, ion sources), Penning-Entladungen, Induktive gekoppelte Plasmen (inductively coupled plasma, ICP) oder Glühentladungs-Quellen (glow discharge source) etc. sind für das erfindungsgemässe Verfahren geeignet. Penning-, Magnetron- und invertierte Magnetron-Anordnungen sind geeignet zur Erzeugung des Plasmas, da diese Anordnungen sehr kompakt gebaut werden können und auch bei niedrigen Drücken, insbesondere bei einem Druck bis hinunter zu $10^{-8}$ mbar, ausreichend Ionenausbeute sicherstellen. Die drei letztgenannten Plasmaquellen werden unter dem Sammelbegriff ExB-Quellen zusammengefasst.

Die Erfinder haben erkannt, dass durch die Messung der Intensitäten in zwei verschiedenen, geschickt gewählten Wellenlängenbereichen der vom Plasma ausgehenden elektromagnetischen Strahlung, insbesondere von elektromagnetischer Strahlung im optischen Bereich, zusätzliche Informationen über den Druck im Probenraum gewonnen werden, mittels deren eine Doppeldeutigkeit bei der Zuordnung eines Drucks zum Messergebnis einer Strommessung aufgelöst werden kann.

Die gemessenen Intensitäten elektromagnetischer Strahlung beziehen sich beispielsweise auf Strahlungsintensitäten im optischen Bereich, d.h. Strahlungsintensitäten von sichtbarem Licht, von ultravioletter Strahlung oder von Infrarotstrahlung, insbesondere aus dem nahen Infrarotbereich. Atome und Ionen in einem Plasma emittieren in diesem Wellenlängenbereich Strahlung, die für das jeweilige chemische Element charakteristische Emissionslinien zeigt. Die Wellenlängen dieser charakteristischen Emissionslinien sind aus dem Fachgebiet der Atomemissionsspektrometrie (engl. Atomic Emission Spectroscopy, abgekürzt AES) bekannt und können für ein zu messendes Gas nachgeschlagen werden. Ein zu messendes Gas kann, je nach Anwendungsfall, beispielsweise Stickstoff, Sauerstoff, Argon oder Helium sein.

Erfindungsgemäss wird eine erste Strahlungsintensität von elektromagnetischer Strahlung eines ersten Wellenlängenbereichs gemessen und es wird eine zweite Strahlungsintensität von elektromagnetischer Strahlung eines zweiten Wellenlängenbereichs gemessen. Der erste und der zweite Wellenlängenbereich sind so gewählt, dass im ersten Wellenlängenbereich eine erste Emissionslinie enthalten ist, aber eine zweite Emissionslinie ausgeschlossen ist. Im zweiten Wellenlängenbereich dagegen ist die zweite Emissionslinie beobachtbar. Erster und zweiter Wellenlängenbereich können sehr schmal, d.h. beispielsweise nur wenig mehr als die natürlichen Linienbreiten der ersten resp. zweiten Emissionslinie, gewählt werden, sodass im Wesentlichen nur die erste resp. zweite Emissionslinie im jeweiligen Wellenlängenbereich liegen. Der zweite Wellenlängenbereich kann so gross gewählt sein, dass auch die erste Emissionslinie im zweiten Wellenlängenbereich liegt. Die erste und die zweite Emissionslinie sind Emissionslinien von Plasmaspezies desselben chemischen Elements, das hier als das erste chemische Element bezeichnet wird. Es kann sich um eine erste und zweite Emissionslinie derselben ersten Plasmaspezies handeln. Alternativ kann es sich bei der zweiten Emissionslinie um eine Emissionslinie einer zweiten Plasmaspezies handeln, die von der ersten Plasmaspezies verschieden ist, aber bei der es sich um eine Plasmaspezies desselben ersten chemischen Elements handelt. Unter Plasmaspezies verstehen wir gasförmige Atome und chemische Verbindungen, welche durch eine chemische Strukturformel, ihren Ladungszustand (z.B. neutral, einfach ionisiert, zweifach ionisiert) und allenfalls ihren Anregungszustand charakterisiert sind. Eine Plasmaspezies eines Elements enthält dieses Element in ihrer Strukturformel. Beispielsweise sind das neutrale Stickstoff-Molekül $N_2$, das neutrale Stickstoff-Atom NI, ein einfach ionisiertes Stickstoffatom NII und ein zweifach ionisiertes Stickstoffatom NIII vier verschiedene Plasmaspezies des chemischen Elements Stickstoff. Als weiteres Beispiel sind das neutrale Argon-Atom Ar und das Argon-Ion $Ar^+$ zwei verschiedene Plasmaspezies des chemischen Elements Argon. Dadurch, dass erfindungsgemäss zwei verschiedene Emissionslinien von einer oder zwei Plasmaspezies desselben chemischen Elements beobachtet werden, kann zusätzlich zur Stromstärke ein weiterer druckabhängiger Parameter ermittelt werden. Für den Fall, dass Emissionslinien von Plasmaspezies mit einer Strukturformel mit mehr als zwei Atomen beobachtet werden, ist es vorteilhaft, wenn die Emissionslinien zu Plasmaspezies gehören, die nicht nur ein gemeinsames chemisches Element aufweisen, sondern möglichst grosse Teile der Strukturformel gemeinsam haben. Auf diese Weise ist das Intensitätsverhältnis aus der gemessenen ersten und zweiten Intensität hauptsächlich von der Teilchendichte im Plasma, also vom Druck abhängig. Eine Abhängigkeit von der Zusammensetzung des Restgases wird so reduziert. Bevorzugterweise handelt es sich bei der ersten und zweiten Emissionslinie um Emissionslinien desselben Gases, d.h. um Emissionslinien desselben Atoms oder Moleküls im gasförmigen Zustand oder Plasmazustand.

Als letzter Schritt des Verfahrens wird der Druck im Vakuumsystem als Funktion der gemessenen Stromstärke, der gemessenen ersten Strahlungsintensität und der gemessenen zweiten Strahlungsintensität bestimmt. Dabei können beispielsweise die erste und zweite Strahlungsintensität zu einem Verhältnis der Strahlungsintensität verrechnet werden und dann der Druck abhängig von gemessener Stromstärke und vom berechneten Verhältnis der Strahlungsintensitäten ermittelt werden.

Die Messungen der Stromstärke, der ersten und der zweiten Strahlungsintensität können gleichzeitig oder zeitversetzt zueinander erfolgen. Ist das Plasma einmal erzeugt, können die genannten Messungen beispielsweise periodisch wiederholt oder kontinuierlich durchgeführt werden, um Veränderungen im Druck des Vakuumsystems periodisch oder kontinuierlich zu überwachen. Dazu muss das Plasma durch Energiezufuhr aufrechterhalten werden. Varianten des Verfahrens, bei denen vor jeder Messung ein Plasma erzeugt wird, sind ebenfalls denkbar.

Varianten des Verfahrens ergeben sich aus den Merkmalen der abhängigen Ansprüche 2 und 3.

In einer Variante des Verfahrens wird im Schritt e) des Bestimmens des Drucks im Vakuumsystem basierend auf der gemessenen ersten Strahlungsintensität und der gemessenen zweiten Strahlungsintensität ein Schätzwert des Drucks bestimmt. Ein Definitionsbereich einer Druck-Stromstärke-Kalibrationskurve wird auf einen Druckbereich eingeschränkt wird, der den Schätzwert enthält und in dem die Druck-Stromstärke-Kalibrationskurve monoton ist. Basierend auf der Druck-Stromstärke-Kalibrationskurve im eingeschränkten Definitionsbereich und basierend auf der gemessenen Stromstärke, wird der Druck im Vakuumsystem bestimmt.

Diese Variante des Verfahrens erlaubt die Bestimmung eines Drucks über einen grossen Messbereich hinweg, auch wenn die Druck-Stromstärke-Kalibrationskurve im gesamten Messbereich monoton steigende und monoton fallende Abschnitte aufweist. Aus den beiden gemessenen Strahlungsintensitäten braucht noch kein exakter Druck bestimmt zu werden. Es reicht, wenn ein Schätzwert für den Druck bestimmt werden kann, mit dessen Kenntnis die in Frage kommenden Druckwerte mit ausreichender Sicherheit auf einen monotonen Bereich der Druck-Stromstärke-Kalibrationskurve eingeschränkt werden kann. Dann wird die Zuordnung des Drucks zur gemessenen Stromstärke eindeutig und der Druck kann mit der für die Stromstärke-Messung typischen hohen Präzision bestimmt werden.

In einer Variante des Verfahrens wird ein Logarithmus des Schätzwerts p0 des Drucks Anhand der Formel

$$\log(\text{p0}) = a \ (I\_1 \ / \ I\_2) + b$$

bestimmt. Dabei sind a und b vorab ermittelte Koeffizienten, welche von der Wahl der Emissionslinien, der verwendeten Anordnung zur Erzeugung des Plasmas und von der Basis des Logarithmus abhängen.

Diese Variante des Verfahrens ermöglicht eine sehr einfache und robuste Schätzung der Grössenordnung des Drucks basierend auf einer linearen Funktion des Intensitätsverhältnisses von erster und zweiter Strahlungsintensität. Ein Druckbereich um diesen Schätzwert herum kann dann als eingeschränkter Definitionsbereich für den Druck verwendet werden. Falls der Schätzwert p0 beispielsweise mit einer Fehlertoleranz von $\Delta p$ den wahren Druck schätzt, so kann der eingeschränkte Definitionsbereich für den Druck beispielsweise von (p0-10*$\Delta p$) bis (p0+10*$\Delta p$) gewählt werden.

Die Koeffizienten a und b können durch Kalibrationsmessungen bei bekanntem Druck ermittelt werden. Mit einer Änderung der Basis des Logarithmus (z.B. Logarithmus zur Basis e, oder Logarithmus zur Basis 10) ändern sich die Koeffizienten a und b um denselben Faktor. Weiter wird die Aufgabe durch einen Vakuum-Drucksensor nach Anspruch 4 gelöst.

Der erfindungsgemässe Vakuum-Drucksensor umfasst:

- einen Probenraum, in dem ein Plasma erzeugt werden kann, wobei der Probenraum elektrischen Kontakt mit einer ersten Elektrode und mit einer zweiten Elektrode hat,
- ein Strommessgerät, welches elektrisch verbunden ist mit der ersten und mit der zweiten Elektrode und zum Probenraum in Serie geschaltet ist,
- ein wellenlängenselektives Element, und
- ein erstes und ein zweites Detektorelement zum Messen einer Strahlungsintensität einer elektromagnetischen Strahlung.

Das wellenlängenselektive Element, das erste Detektorelement und das zweite Detektorelement sind so angeordnet, dass im ersten Detektorelement nur vom Probenraum ausgehende elektromagnetische Strahlung eines ersten Wellenlängenbereichs eintreffen kann und dass im zweiten Detektorelement nur vom Probenraum ausgehende elektromagnetische Strahlung eines zweiten Wellenlängenbereichs eintreffen kann. Im ersten Wellenlängenbereich liegt mindestens eine erste Emissionslinie einer ersten Plasmaspezies eines ersten chemischen Elements. Im zweiten Wellenlängenbereich liegt eine zweite Emissionslinie der ersten Plasmaspezies des ersten chemischen Elements oder einer zweiten Plasmaspezies des ersten chemischen Elements. Die zweite Emissionslinie liegt ausserhalb des ersten Wellenlängenbereichs.

Der erfindungsgemässe Vakuum-Drucksensor ist dazu geeignet, die Messungen gemäss den Schritten b), c) und d) des erfindungsgemässen Verfahrens durchzuführen. Dabei sind das wellenlängenselektive Element und das erste und zweite Detektorelement ermöglichen die Messungen der Strahlungsintensität aus dem ersten resp. zweiten Wellenlängenbereich, wobei diese beiden Wellenlängenbereiche so gewählt sind, wie oben im Zusammenhang mit dem erfindungsgemässen Verfahren besprochen.

Das wellenlängenselektive Element kann beispielsweise ein optischer Filter mit Schmalband-, Weitband- oder Bandpass-Charakteristik sein. Ein solcher optischer Filter kann beispielsweise unmittelbar vor einem der Detektorelemente angebracht sein, sodass die elektromagnetische Strahlung aus dem Plasma, die beim entsprechenden Detektorelement eintrifft, den optischen Filter passieren muss. Ein solcher Filter kann beispielsweise ein Interferenzfilter sein, der in bestimmten Wellenlängenbereich reflektiert und in anderen Wellenlängenbereichen für Strahlung durchlässig ist. Der Filter kann ein Farbfilter mit Transmission von mehr als 95% in einem ausgewählten Wellenlängenbereich sein. Damit ist im Strahlenpfad nach dem Filter vor allem noch Strahlung mit den vom Filter durchgelassenen Wellenlängen vorhanden. Das wellenlängenselektive Element kann beispielsweise auch ein optisches Gitter oder ein Prisma sein, sodass elektromagnetische Strahlung abhängig von der Wellenlänge in unterschiedlichen Richtungen gebeugt oder gebrochen wird. Die Detektorelemente können dann in der entsprechenden Richtung positioniert sein.

Der Vakuum-Drucksensor kann beispielsweise eine Anschlussöffnung, z.B. als Anschlussöffnung einer Messkammer, haben. Über eine solche Anschlussöffnung kann das Probenvolumen mit einem Vakuumsystem fluiddynamisch verbindbar sein. In diesem Fall kann der Vakuum-Drucksensor unabhängig vom Vakuumsystem hergestellt und gewartet werden. Die Anschlussöffnung kann beispielsweise mit einem Standard-Vakuumflansch umgeben sein. Der Vakuum-Drucksensor kann alternativ auch in ein Vakuumsystem eingebaut sein.

Der Probenraum kann beispielsweise von einer Messkammer umgeben sein. Mindestens eine der ersten und der zweiten Elektrode können teilweise oder komplett als Wandung einer Messkammer des Vakuum-Drucksensors ausgebildet sein.

Ausführungsformen des Vakuum-Drucksensors ergeben sich aus den Merkmalen der Ansprüche 5 bis 12.

Eine Ausführungsform des Vakuum-Drucksensors umfasst eine Messkammer, welche den Probenraum umgibt. Die Messkammer hat ein Fenster in einer Wandung der Messkammer oder als Wandung der Messkammer. Das Fenster ist in einem optischen Wellenlängenbereich transparent. Ein durchgehender erster Strahlungspfad, der ausgehend vom Probenraum das Fenster durchquert und im ersten Detektorelement endet ist definiert. Ein durchgehender zweiter Strahlungspfad, der ausgehend vom Probenraum das Fenster durchquert und im zweiten Detektorelement endet ist definiert.

In dieser Ausführungsform liegen Probenraum und die beiden Detektorelemente auf unterschiedlichen Seiten des Fensters. Das Fenster kann beispielsweise aus Saphir oder Quarzglas bestehen. Fenster aus Saphir oder Quarzglas sind praktisch für den ganzen optischen Wellenlängenbereich transparent, sind chemisch inert, d.h. werden weder durch das Plasma noch durch allfällige Prozessgase angegriffen, haben hohe mechanische Festigkeit und sind Vakuumkompatibel. Saphir hat insbesondere eine sehr hohe Transmission im Wellenlängenbereich von 250 - 1000 Nanometer. Mit einem Fenster aus Saphir oder Quarzglas lassen sich die optischen Detektorelemente vom Vakuum, resp. vom Plasma im Probenvolumen, resp. auch von allfälligen Prozessgasen, trennen, ohne Einbussen bei der aus dem Probenvolumen kommenden, detektierbaren Strahlungsintensität in Kauf nehmen zu müssen. Die optischen Detektorelemente können vom Probenvolumen her gesehen direkt hinter dem Fenster eingebaut werden, was einerseits hohe Empfindlichkeit auf Strahlungsintensität aus dem Probenvolumen zur Folge hat und andererseits eine sehr kompakte Bauweise des gesamten Drucksensors ermöglicht.

In der Ausführungsform mit einem Fenster können das erste und das zweite Detektorelement ausserhalb der Messkammer angeordnet sein. In diesem Fall braucht das erste und zweite Detektorelement keine Anforderungen betreffend Vakuumtauglichkeit zu erfüllen.

Das Fenster kann beispielsweise zwei ebene, zueinander parallele Begrenzungsflächen aufweisen, wobei eine erste Begrenzungsfläche einer Vakuumseite zugewandt ist und eine zweite Begrenzungsfläche einer Detektorseite zugewandt ist. Das Fenster kann zusätzlich auch die Funktion einer elektrischen Durchführung, insbesondere einer Hochspannungs-Durchführung, haben, insbesondere zur Durchführung einer zentralen Anode in den Probenraum hinein. Weiter können eine oder mehrere Begrenzungsflächen des Fensters gekrümmt ausgeführt sein und damit eine Fokussierungswirkung auf elektromagnetische Strahlungspfade haben. Insbesondere kann die Geometrie der Begrenzungsflächen so ausgestaltet sein, dass aus dem Plasma austretende Strahlungspfade auf zumindest eines der Detektorelemente fokussiert werden. Eine Erhöhung von Strahlungsintensität auf dem ersten und/oder zweiten Detektorelement und damit genauere Auswertung der Spektrallinien ist mit dieser Variante der Ausführungsform erreichbar. Auf diese Weise kann das Fenster beispielsweise als elektro-optische Durchführung mit Linsenwirkung gesehen werden.

In einer Ausführungsform des Vakuum-Drucksensors ist das erste Detektorelement und/oder das zweite Detektorelement eine Photodiode, ein Phototransistor, ein Charge-Coupled-Device (abgekürzt CCD), ein Multi Channel Plate (abgekürzt MCR) oder ein Channel Electrom Multiplier (abgekürzt CEM).

Mit einer Photodiode oder einem Phototransistor lässt sich der für die Auswertung der Emissionslinien des zu messenden Gases relevante optische Wellenlängenbereich, d.h. Infrarot, sichtbarer Bereich und Ultraviolett, gut abdecken. Mit Photodioden oder Phototransistoren auf

Silizium-Basis kann beispielsweise ein Empfindlichkeitsbereich für Wellenlängen von ca. 190 - 1100 Nanometer abgedeckt werden. Mit Photodioden oder Phototransistoren auf Germanium-Basis kann beispielsweise ein Empfindlichkeitsbereich für Wellenlängen von ca. 400 - 1700 Nanometer abgedeckt werden. Die Verwendung einzelner Photodioden hat den Vorteil, dass sie eine relativ grosse Eintrittsfläche abdecken können, damit wird, z.B. im Vergleich mit der Verwendung eines Spektrometers, sehr viel Empfindlichkeit gewonnen. Photodioden oder Phototransistoren sind relativ preisgünstige Detektorelemente. Photodioden oder Phototransistoren haben im Vergleich zu anderen Detektorelementen einen kleinen Platzbedarf und erlauben dadurch eine kompakte Bauweise des Vakuum-Drucksensors.

In einer Ausführungsform umfasst der Vakuum-Drucksensors ein Miniaturspektrometer mit einem Detektorarray umfasst und das erste Detektorelement und das zweite Detektorelement sind Elemente des Detektorarrays.

Ein Miniaturspektrometer kann beispielsweise einen Schlitz oder ein Loch aufweisen, an dem der erste Strahlungspfad ins Miniaturspektrometer eintritt. Ein optisches Gitter oder ein Prisma sorgt dafür, dass die einfallende Strahlung in verschiedene Richtung gebeugt resp. abgelenkt wird und auf die verschiedenen Elemente eines Detektorarrays fällt. Auf diese Weise lässt sich ein Intensitätsspektrum der aus dem Probenvolumen emittierten Strahlung ermitteln. Miniaturspektrometer mit geometrischen Abmessungen in der Grössenordnung von 20 mm x 10 mm x 10 mm sind kommerzielle erhältlich. Damit wird eine kompakte Bauweise des Vakuum-Drucksensors möglich. Ein Detektorarray kann beispielsweise als Photodiodenarray oder als Array von Phototransistoren ausgeführt sein. Ein Detektorarray kann beispielsweise als Array von CCD Elementen ausgeführt sein. Erster und zweiter Wellenlängenbereich können je durch ein einzelnes Element des Detektors abgedeckt sein. Es ist auch möglich, die gemessenen Intensitäten mehrerer, z.B. mehrerer benachbarter, Elemente zu der gemessenen ersten resp. zweiten Strahlungsintensität aufzuaddieren.

In einer Ausführungsform umfasst der Vakuum-Drucksensors eine Vorrichtung zur Erzeugung eines Magnetfeldes im Probenraum.

Die Vorrichtung zur Erzeugung des Magnetfelds im Probenvolumen kann beispielsweise eine Spule sein. Die Vorrichtung zur Erzeugung eines Magnetfelds im Probenvolumen kann beispielsweise auch eine Anordnung von Permanentmagneten sein. Zusätzlich können auch ferromagnetische Elemente zur Führung der mit der Vorrichtung erzeugten Magnetfelder eingesetzt werden, um die gewünschte Magnetfeldverteilung im Probenvolumen zu erreichen. In dieser Ausführungsform können die elektrischen Felder, die von der ersten und zweiten Elektrode erzeugt sind und die magnetischen Felder, die von der Vorrichtung zur Erzeugung eines Magnetfelds im Probenvolumen sind, so angeordnet sein, dass ein Plasma sehr effizient erzeugt wird. Die elektrischen Felder beschleunigen die Elektronen auf Energien grösser als das Ionisationspotential und die magnetischen Felder verlängern einerseits die Trajektorien, was eine höhere Wahrscheinlichkeit der Kollision mit einem anderen Teilchen gibt und halten andererseits die Elektronen in Bahnen mit circa hunderten von Elektronenvolt, wo der maximale Wirkungsquerschnitt mit Molekülen und Atomen liegt.

In einer Ausführungsform des Vakuum-Drucksensors mit einer Vorrichtung zur Erzeugung eines Magnetfeldes im Probenraum, ist die Anordnung von erster Elektrode, zweiter Elektrode und der Vorrichtung zur Erzeugung eines Magnetfeldes im Probenraum so ausgestaltet, dass durch Anlegen einer elektrischen Spannung an die Elektroden ein elektrisches Feld erzeugt werden kann, das im Probenraum im Wesentlichen senkrecht zum Magnetfeld ausgerichtet ist. In dieser Ausführungsform kann die Anordnung von erster Elektrode, zweiter Elektrode und der Vorrichtung zur Erzeugung eines Magnetfeldes insbesondere als Magnetron-Anordnung, Invertierte-Magnetron-Anordnung oder Penning-Anordnung ausgestaltet sein, d.h. es kann sich um eine sogenannte ExB-Plasmaquelle handeln.

In einer ExB-Plasmaquelle ist die Vorrichtung zur Erzeugung des Magnetfelds im Probenvolumen so angeordnet werden, dass sich die Feldlinien der magnetischen und elektrischen Felder im Probenvolumen im Wesentlichen unter einem rechten Winkel kreuzen.

Die Erfinder haben erkannt, dass sich Magnetron-Anordnungen, Invertierte-Magnetron-Anordnungen und Penning-Anordnungen als besonders effektiv erweisen. Effektiv heisst in diesem Zusammenhang, dass der Bereich des Probenvolumens mit maximaler Emission von Photonen über einen grossen Druckbereich, beispielsweise über mehrere Zehnerpotenzen im Druck, ortsstabil ist. Beispielsweise mit einer Invertierten-Magnetron-Anordnung kann erreicht werden, dass der Bereich des Probenvolumens mit maximaler Emission von Photonen über mehr als 10 Zehnerpotenzen im Druck ortsstabil ist. Ob die Entladung bei $10^{-9}$ mbar oder bei 10 mbar gezündet wird, immer befinden sich die Volumina mit grösster Emission weitgehend am gleichen Ort, respektive in einem Torus-förmigen Bereich mit immer gleichem Durchmesser. Weiter ist dieser räumliche Bereich für eine Beobachtung in den genannten Elektrodenanordnungen gut zugänglich. Das ermöglicht die Verwendung eines sehr einfachen Detektorelements, nämlich das Anbringen von Photodioden mit Farbfiltern (und allenfalls einer kleinen Fokuslinse), beispielsweise direkt angrenzend an das Fenster um eine zentrale Anode herum. Statt der Dioden kann beispielsweise auch ein Miniaturspektrometer direkt angrenzend an das Fenster eingebaut werden.

In einer Ausführungsform umfasst der Vakuum-Drucksensor eine Energiequelle zur Zufuhr von Energie in ein Plasma im Probenraum.

Um ein Plasma aufrecht zu erhalten braucht es eine Energiequelle, die grundsätzlich auch unabhängig vom erfindungsgemässen Vakuum-Drucksensor zur Verfügung gestellt werden kann, aber in den Probenraum hineinwirken kann. In der besprochenen Ausführungsform ist die Energiequelle Teil des Vakuum-Drucksensors, was zu besonders einfach zu handhabenden und kompakten Anordnungen führt. Die Zufuhr von Energie aus der Energiequelle in das Plasma kann beispielsweise über elektrisch leitende Kontakte, kapazitiv, induktiv oder über Strahlung, beispielsweise Laserstrahlung oder Mikrowellenstrahlung, erfolgen.

In einer Ausführungsform eines Vakuum-Drucksensors mit einer Energiequelle zur Zufuhr von Energie in ein Plasma im Probenraum umfasst die Energiequelle eine Hochspannungsquelle, welche elektrisch leitend verbunden ist mit der ersten und der zweiten Elektrode und welche mit dem Strommessgerät in Serie geschaltet ist.

In einer Ausführungsform eines Vakuum-Drucksensors mit einer Energiequelle zur Zufuhr von Energie in ein Plasma im Probenraum umfasst die Energiequelle eine Wechselstromquelle und eine Induktionsspule umfasst, wobei die Induktionsspule elektrisch mit der Wechselstromquelle verbunden ist und dazu ausgelegt ist, ein magnetisches Wechselfeld im Probenraum zu erzeugen, wenn die Induktionsspule von Wechselstrom durchflossen wird.

Merkmale von Ausführungsformen des Vakuums-Drucksensors sind beliebig kombinierbar, sofern nicht im Widerspruch zueinander.

Weiter ist die Erfindung auf eine Vorrichtung gemäss Anspruch 13 gerichtet. Es handelt sich dabei um eine Vorrichtung zur Ausführung des erfindungsgemässen Verfahrens. Die Vorrichtung umfasst einen erfindungsgemässen Vakuum-Drucksensor und eine Verarbeitungseinheit. Der Vakuum-Drucksensor kann die Merkmale einer der genannten Ausführungsformen haben. Die Verarbeitungseinheit ist mit dem Stromstärkemessgerät, dem ersten und zweiten Detektorelement für elektromagnetische Strahlung wirkverbunden zur Übertragung der gemessenen Stromstärke, der gemessenen ersten Strahlungsintensität und der gemessenen zweiten Strahlungsintensität. Die Verarbeitungseinheit ist dazu ausgelegt, als Funktion der gemessenen Stromstärke, der gemessenen ersten Strahlungsintensität und der gemessenen zweiten Strahlungsintensität den Druck im Vakuumsystem zu bestimmen.

Die Verarbeitungseinheit kann einen digitalen Rechner, einen analogen Rechner oder eine entsprechende Elektronikschaltung umfassen. Eine geeignete Elektronikschaltung kann beispielsweise zwei Verstärker mit logarithmischer Antwortfunktion umfassen, die je einem Eingang eines Operationsverstärkers vorgeschaltet sind. Mit einer derartigen Elektronikschaltung kann beispielsweise das logarithmierte Verhältnis der ersten und zweiten Strahlungsintensität gebildet werden, wenn das Ausgangssignal des ersten und zweiten Detektorelements je einem Eingang eines der zwei Verstärker zugeführt wird. Die Verarbeitungseinheit kann insbesondere einen Mikroprozessor oder einen digitalen Signalprozessor umfassen. Die Verarbeitungseinheit kann insbesondere so programmiert sein, dass der Verfahrensschritt e) aus dem erfindungsgemässen Verfahren oder einer Variante des Verfahrens ausführt, wenn die gemessene Stromstärke, die gemessene erste Strahlungsintensität und die gemessene zweite Strahlungsintensität als Eingabewerte zur Verfügung stehen. Diese Eingabewerte können als analoges oder digitales Signal, über elektrische Leitungen oder drahtlos an die Verarbeitungseinheit übertragen werden. Die Verarbeitungseinheit kann in ein Gehäuse eines Vakuum-Drucksensors eingebaut sein. Die Verarbeitungseinheit kann Speichermittel zur Speicherung von Kalibrations-Daten, insbesondere von Druck-Stromstärke-Kalibrationskurven oder von Koeffizienten a und b gemäss einer Variante des Verfahrens umfassen.

Weiter ist die Erfindung auf eine Anwendung gemäss Anspruch 14 gerichtet.

Es handelt sich dabei um eine Anwendung des erfindungsgemässen Verfahrens zur Ausdehnung des Druckmessbereichsbereichs eines Vakuum-Drucksensors, der auf einer Messung einer Stromstärke durch ein Plasma beruht. Es kann sich dabei insbesondere um einen Vakuum-Drucksensors basierend auf dem Funktionsprinzip eines Kaltkathoden-Vakuummeters handeln. Dabei wird der Druckmessbereich auf einen Druckmessbereich ausgedehnt, der sowohl Drücke unterhalb als auch Drücke oberhalb eines Extremwerts einer Druck-Stromstärke-Kennlinie des Vakuum-Drucksensors umfasst.

Falls die Druck-Stromstärke-Kennlinie eines Vakuum-Drucksensors, der auf einer Messung einer Stromstärke durch ein Plasma beruht, einen Extremwert, d.h. ein Minimum oder ein Maximum, aufweist, so ist die Zuordnung einer gemessenen Stromstärke zu einem Druck nicht eindeutig. Üblicherweise muss man sich auf einen Druckmessbereich einschränken, der entweder nur Drücke unterhalb des Drucks umfasst, bei dem der Extremwert auftritt, oder nur Drücke oberhalb des Drucks umfasst, bei dem der Extremwert auftritt. Durch die Anwendung des erfindungsgemässen Verfahrens kann die Doppeldeutigkeit aufgehoben werden und ein ausgedehnter Druckmessbereich beidseits des Extremwerts kann mit dem Vakuum-Drucksensor abgedeckt werden.

Die erfindungsgemässe Anwendung des Verfahrens ermöglicht also beispielsweise ein Weitbereichs-Kaltkathoden-Vakuummeter.

Weiter im Rahmen der Erfindung liegt die Verwendung nach Anspruch 15.

Die erfindungsgemässe Verwendung ist die Verwendung eines erfindungsgemässen Vakuum-Drucksensors in einem erfindungsgemässen Verfahren. Dabei können Ausführungsformen des Vakuum-Drucksensors beliebig mit Varianten des Verfahrens kombiniert werden, falls nicht widersprüchlich.

Ausführungsbeispiele der vorliegenden Erfindung werden nachstehend anhand von Figuren noch näher erläutert. Es zeigen

Fig. 1 ein Flussdiagramm des erfindungsgemässen Verfahrens;

Fig. 2 eine schematische Darstellung eines erfindungsgemässen Vakuum-Drucksensors;

Fig. 3 eine grafische Darstellung des Zusammenhangs von Druck und Stromstärke respektive von Druck und Strahlungsintensitätsverhältnis in einer Ausführungsform des Vakuum-Drucksensors;

Fig. 4 einen schematischen Querschnitt durch einen Teil einer Ausführungsform eines Vakuum-Drucksensors;

Fig. 5 ein schematische Stickstoff-Emissionsspektrum mit Beispielen für einen ersten und einen zweiten Wellenlängenbereich;

Fig. 6 einen schematischen Querschnitt durch ein Detail einer Ausführungsform eines Vakuum-Drucksensors;

Fig. 7 einen schematischen Querschnitt durch eine Ausführungsform eines Vakuum-Drucksensors;

Fig. 8 ein Beispiel für eine Festlegung eines ersten und zweiten Wellenlängenbereichs mit Hilfe eines wellenlängenselektiven Elements, in Teilfiguren 8.a) und 8.b) je Effizienzkurven in Funktion der Wellenlänge.

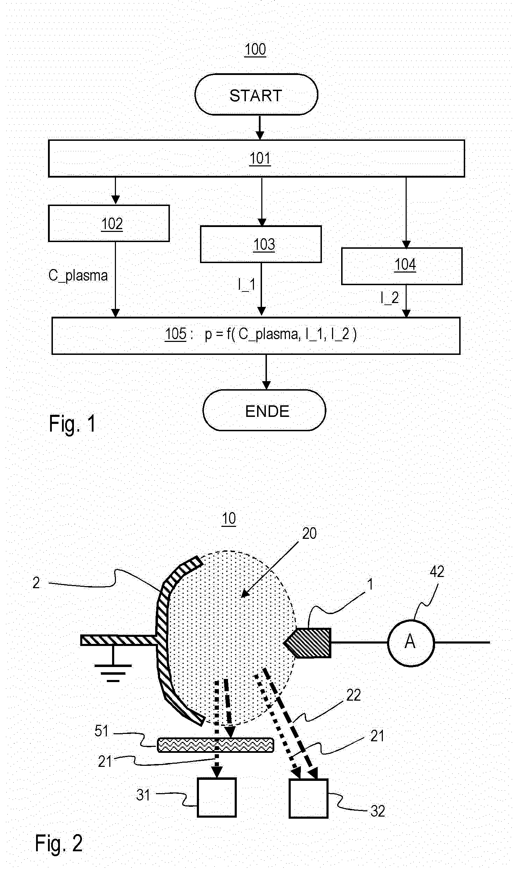

Figur 1 zeigt die Schritte des Verfahrens 100 zur Bestimmung eines Drucks in einem Vakuumsystem als Blöcke in einem Flussdiagramm. Das Verfahren beginnt mit dem Schritt Erzeugen 101 eines Plasmas in einem Probenraum 20, welcher mit dem Vakuumsystem fluiddynamisch verbunden ist und welcher mit einer ersten Elektrode und einer zweiten Elektrode in elektrischem Kontakt steht.

Drei Messvorgänge 102, 103, 104 werden parallel oder zeitlich verschoben durchgeführt, was durch die leicht versetzten Blöcke im Flussdiagramm dargestellt ist. Alle drei Messvorgänge beziehen sich auf Messungen am zuvor erzeugten Plasma. Es handelt sich dabei um die Schritte:

- Messen 102 einer Stromstärke $C\_plasma$ eines elektrischen Stromes, der zwischen der ersten Elektrode und der zweiten Elektrode durch das Plasma hindurch fliesst,
- Messen 103 einer ersten Strahlungsintensität $I\_1$ von aus dem Plasma emittierter elektromagnetischer Strahlung eines ersten Wellenlängenbereichs,
- Messen 104 einer zweiten Strahlungsintensität $I\_2$ von aus dem Plasma emittierter elektromagnetischer Strahlung eines zweiten Wellenlängenbereichs.

Der erste und der zweite Wellenlängenbereich sind dabei so definiert, wie oben zum erfindungsgemässen Verfahren beschrieben.

Als letzer Schritt, basierend auf den Messresultaten $C\_plasma$, $I\_1$ und $I\_2$ der Messvorgänge, erfolgt das Bestimmen 105 des Drucks p im Vakuumsystem als Funktion der gemessenen Stromstärke $C\_plasma$, der gemessenen ersten Strahlungsintensität $I\_1$ und der gemessenen zweiten Strahlungsintensität $I\_2$. Dieser Zusammenhang wird durch die Formel $p = f( C\_plasma, I\_1, I\_2 )$ zum Ausdruck gebracht, wobei f eine mathematische Funktion oder eine mathematische Prozedur symbolisiert, welche in Varianten des Verfahrens neben den drei Messwerten auch weitere Eingaben verarbeiten kann, z.B. Kalibrationskoeffizienten, eine Kalibrationskurve oder eine Kalibrationsfläche.

Figur 2 zeigt schematisch, stark vereinfacht und teilweise im Querschnitt einen erfindungsgemässen Vakuum-Drucksensor 10. Im Zentrum befindet sich ein Probenraum 20. In diesem Probenraum kann ein Plasma - gepunktet angedeutet - erzeugt werden. Eine erste Elektrode 1 und eine zweite Elektrode 2 sind in elektrischem Kontakt mit dem Plasma im Probenraum. Ein Strommessgerät 42 ist mit der ersten und zweiten Elektrode elektrisch leitend verbunden und mit dem Probenraum in Serie geschaltet. Ein wellenlängenselektives Element 51 ist so vor einem ersten Detektorelement 31 angebracht, dass Strahlung 21 einer ersten Emissionslinie (dargestellt als gestrichelter Pfeil mit kurzen Strichen) zum Detektorelement 31 gelangen kann, aber Strahlung 22 einer zweiten Emissionslinie (dargestellt als gestrichelter Pfeil mit langen Strichen) abgeblockt wird. Strahlung 21, 22 der ersten und zweiten Emissionslinie gelangt zu einem zweiten Detektorelement 32. Die Pfeile zeigen repräsentativ je einen möglichen Strahlungspfad aus dem Plasma zu den Detektorelementen 31, 32.

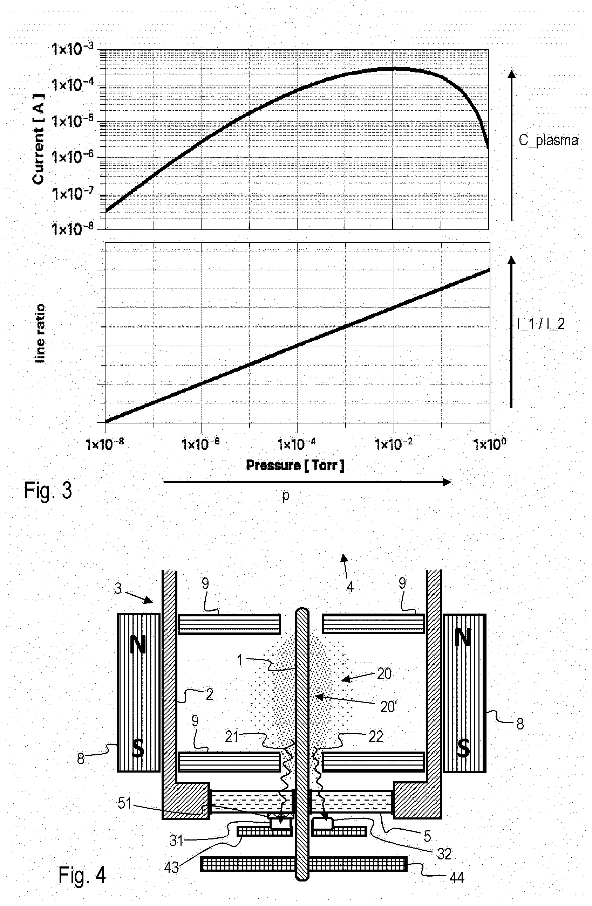

Figur 3 zeigt in der oberen Grafik eine typische Kalibrationskurve der Stromstärke $C\_plasma$ in Ampère, die durch das Plasma hindurchfliesst, in Abhängigkeit vom Druck p im Probenraum eines Vakuum-Drucksensors. Die untere Grafik zeigt eine typische Kalibrationskurve für das Verhältnis $I\_1 / I\_2$, d.h. das Verhältnis von gemessener erster Strahlungsintensität $I\_1$ zur gemessenen zweiten Strahlungsintensität $I\_2$, in Abhängigkeit vom Druck p im selben Vakuum-Drucksensor. Es handelt sich in diesem Fall um Kalibrationskurven einer Ausführungsform des Vakuum-Drucksensors, der als Kaltkathoden-Vakuummeter ausgeführt ist. Die horizontal eingezeichnete Achse mit dem Druck p in Torr gilt für beide Kurven. Der Druck ist auf einer logarithmischen Skala eingezeichnet, sodass die Abhängigkeit vom Druck über 8 Grössenordnungen von $10^{-8}$ Torr bis $10^{0}$ Torr abgelesen werden kann. Die Stromstärke $C\_plasma$ ist ebenfalls auf einer logarithmischen Skala aufgetragen, welche über 5 Grössenordnungen von $10^{-8}$ Ampère bis $10^{-3}$ Ampère reicht.

Die Stromstärke C_plasma hat ein Maximum bei einem Druck in der Nähe von $10^{-2}$ Torr. Für eine Stromstärke C_plasma im Bereich zwischen ca. $2*10^{-6}$ Ampère und ca. $3*10^{-4}$ Ampère existieren zwei Druckwerte p, die zu dieser Stromstärke führen können. Das Verhältnis I_1/I_2 ist auf einer linearen Skala aufgetragen. Nullpunkt und Steigung sind beim dargestellten Verhältnis I_1/I_2 nicht festgelegt. Es ist erkennbar, dass zwischen dem Logarithmus des Drucks und I_1/I_2 ein linearer Zusammenhang besteht, welcher durch eine Steigung a und einen konstanten Term b beschrieben werden kann. Kennt man das Verhältnis I_1/I_2, so kann die Doppeldeutigkeit der Zuordnung zwischen Stromstärke C_plasma und Druck p aufgelöst werden.

In Figur 4 ist ein Querschnitt durch einen Teil einer Ausführungsform eines Drucksensors gezeigt. Die zweite Elektrode ist als Wandung der Messkammer 3 ausgebildet und hat im Wesentlichen die Form eines Hohlzylinders. Die zweite Elektrode kann in dieser Anordnung beispielsweise als Kathode betrieben werden. Die erste Elektrode 1 in Form eines Stabs liegt auf der Achse des Hohlzylinders. Die erste Elektrode kann in dieser Anordnung beispielsweise als Anode betrieben werden. Die gezeigte Ausführungsform umfasst eine Vorrichtung 8 zur Erzeugung eines Magnetfeldes im Probenvolumen, die als Permanentmagnet ausgebildet ist. "N" und "S" bezeichnen die Lage von Nord- und Südpolen des Permanentmagnetrings. Magnetische Elemente 9 bilden einen magnetischen Rückschluss für die von der Vorrichtung 8 erzeugten Magnetfelder. Im Probenvolumen 20, in dem ein Plasma erzeugt werden kann, existiert ein zentraler Bereich 20', in dem das maximale Leuchten im Probenvolumen auftritt, wenn ein Plasma erzeugt ist. Aus diesem Bereich 20' kann aus dem Plasma emittiert Strahlung entlang dem ersten Strahlungspfad 21 und entlang einem zweiten Strahlungspfad 22 durch das Fenster 5 hindurch zum ersten Detektorelement 31 resp. zum zweiten Detektorelement 32 gelangen. Dem ersten Detektorelement 31 ist in der Richtung zum Probenraum 20 hin ein wellenlängenselektives Element in Form eines Filters 51 vorgelagert. Der Filter 51 lässt Strahlung im Wellenlängenbereich einer ersten Emissionslinie durch und blockiert zumindest den Wellenlängenbereich einer zweiten Emissionslinie. Das Material des Fensters 5 ist so gewählt, dass Strahlung aus dem Wellenlängenbereich der ersten und zweiten Emissionslinie durchgelassen wird. Das Fenster kann beispielsweise durch eine Saphirplatte oder eine Quarzglasplatte gebildet sein. Die Detektorelemente sind in der dargestellten Ausführungsform auf einer Platine 43 angeordnet, welche die Detektorelemente trägt. Eine weitere, an die erste Elektrode angrenzende Platine 44 zur Spannungsversorgung mit Hochspannung ist unterhalb der Platine 43 angeordnet. Ein Pfeil deutet die mögliche Lage einer optionalen Anschlussöffnung 4 für einen Anschluss an ein Vakuumsystem an. Anschlussöffnung und Vakuumsystem sind in dieser Figur nicht gezeigt. In der gezeigten Ausführungsform bildet das Fenster 5 auch eine vakuumdichte elektrische Durchführung für die erste Elektrode 1. Die erste Elektrode kann beispielsweise durch Einglasen mit einem Lotglas-Ring in das Fenster eingeglast sein und so vakuumdicht mit dem Fenster verbunden sein. In der gezeigten Ausführungsform ist das Fenster sowohl gegen die Vakuumseite als auch gegen die Seite mit den Detektorelementen 31 und 32 hin durch eine ebene Begrenzungsfläche begrenzt. Das Fenster 5 ist an seinem äusseren Umfang mit der zweiten Elektrode 2 vakuumdicht verbunden. Auch diese Verbindung kann beispielsweise durch Einglasen mit einem Lotglas-Ring ausgeführt sein.

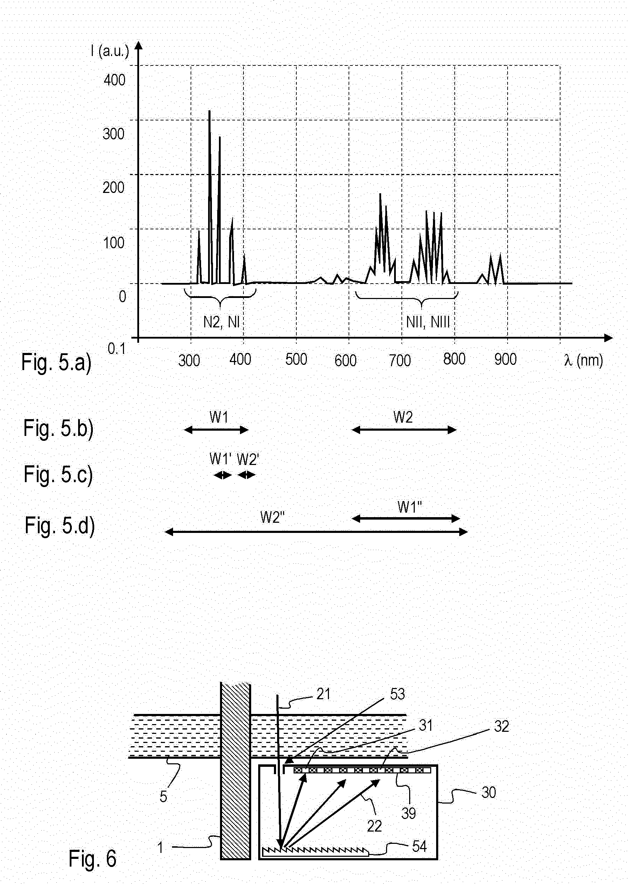

Figur 5.a) zeigt eine schematische Darstellung eines Emissionsspektrums von Plasmaspezies des Elements Stickstoff. Intensitäten I in beliebigen Einheiten (arbitrary units, a.u.) sind gegen die Wellenlänge λ in Nanometern (nm) aufgetragen. Gruppen von Emissionslinien im Bereich 300-400 nm gehören zum Teil zu molekularem Stickstoff N2 und atomarem Stickstoff NI. Gruppen von Emissionslinien im Bereich 600-800 nm gehören zum Teil zu einfach und zweifach (NIII) ionisiertem Stickstoff. Genau genommen treten die Linien von N2, NI, NII und NIII durchmischt in den Frequenzbereichen auf. Stickstoff ist eine wichtiges Restgas in Vakuumsystemen. Das erfindungsgemässe Verfahren kann sich beispielsweise auf Plasmaspezies des chemischen Elements Stickstoff beziehen. Drei Möglichkeiten zur Festlegung von erstem und zweitem Wellenlängenbereich sind in den Figuren 5.b), 5.c) und 5.d) gezeigt, wobei sich die Wellenlängenbereiche jeweils auf die Wellenlängenachse aus Fig. 5.a) beziehen.

Wie in Fig. 5.b) gezeigt, kann der erste Wellenlängenbereich W1 beispielsweise einen Bereich von 300-400 nm umfassen und u.a. mehrere Emissionslinien von Plasmaspezies von N2 und NI beinhalten. Der zweite Wellenlängenbereich W2 umfasst in diesem Fall einen Bereich von 600-800 nm und enthält somit ausschliesslich Emissionslinien, die nicht im ersten Wellenlängenbereich enthalten sind. Fig. 5.c) zeigt ein Beispiel mit eng gewähltem erstem W1' und zweitem W2' Wellenlängenbereich, die je eine einzelne Emissionslinie einer Plasmaspezies aus der Gruppe N2 und N umfassen. Fig. 5.d) zeigt ein weiteres Beispiel, bei dem der zweite Wellenlängenbereich W2" den ersten Wellenlängenbereich W1" vollständig überlappt und zusätzlich einen grossen Wellenlängenbereich umfassend mehrere Emissionslinien von Plasmaspezies N2 und N abdeckt.

Figur 6 zeigt im Querschnitt ein Detail einer Ausführungsform, bei der ein Miniaturspektrometer 30 unmittelbar an das Fenster 5 angrenzend angebracht ist. Der erste Strahlungspfad 21 führt durch das Fenster 5 hindurch durch einen Schlitz 53 in einem Gehäuse des Miniaturspektrometers auf ein Gitter 54. Dadurch entstehen aufgefächerte Strahlungspfade, wobei jeder der aufgefächerten Strahlungspfade einer bestimmten Wellenlänge entspricht. Die Strahlungsintensitäten der einzelnen Wellenlängen werden durch ein Detektorarray 39 mit einer Vielzahl von Detektorelementen gemessen. Einer der aufgefächerten Strahlungspfade ist der erste Strahlungspfad 21 der im ersten Detektorelement 31 endet. Am Ende eines zweiten Strahlungspfades 22 ein zweites Detektorelement 32 angeordnet.

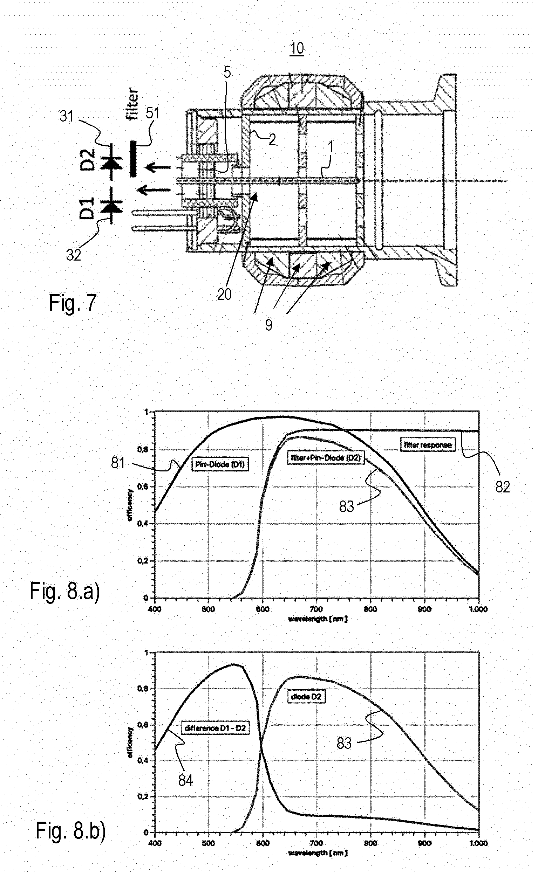

Figur 7 zeigt einen Querschnitt einer Ausführungsform basierend auf einem Vakuum-Drucksensors, wie er in der Veröffentlichungsschrift CH 707 685 A1 im Detail beschrieben ist. Dieser Vakuum-Drucksensor umfasst eine Permanentmagnetanordnung 9 zur Erzeugung eines Magnetfeldes im Probenraum, wobei das Magnetfeld nach aussen weitgehend abgeschirmt ist. Die gezeigte Ausführungsform weist eine im optischen Bereich durchlässige Hochspannungsdurchführung 5 auf, welche dadurch die Funktion eines Fensters 5 hat. Zwei mit ihrem Schaltsymbol repräsentierte Photodioden D1 und D1 sind so montiert, dass das durch die Hochspannungsdurchführung tretende Licht (hier mit zwei Pfeilen symbolisiert) beobachtet werden kann. Zwischen Hochspannungsdurchführung und Photodiode D2 ist ein Filter 51 angeordnet als wellenlängenselektives Element. Aus dem Probenraum, durch die Hochspannungsdurchführung hindurch auf die Photodiode D1 fallendes Licht bleibt ungefiltert.

Somit hat die Photodiode D2 die Funktion des ersten Detektorelements 31 und die Photodiode D1 hat die Funktion des zweiten Detektorelements 32, mit dem zumindest eine zweite Emissionslinie aus dem nicht ausgefilterten Wellenlängenbereich beobachtbar ist. Die Filtercharakteristik des Filters 51 und die Empfindlichkeit der Photodioden kann im gezeigten Ausführungsform beispielsweise so gewählt sein, wie unten zu Figur 8 erläutert. Für die Stabilität der gewonnen Signale ist es von Vorteil, Photodioden des gleichen Typs zu verwenden. Alternativ können auch beide Photodioden mit einem Filter versehen, jeweils angepasst für den zu messenden ersten und zweiten Wellenlängenbereich. Rechts in der Figur ist ein Standard-Vakuumflansch zu erkennen, mit dem der Vakuum-Drucksensor an ein Vakuumsystem angeschlossen werden kann, sodass der Probenraum 20 fluiddynamisch mit dem Vakuumsystem verbunden ist.

Figur 8.a) zeigt für den auf der horizontalen Achse eingezeichneten Wellenlängenbereich von 400 nm bis 1000 nm die Empfindlichkeit 81 einer Photodiode D1, die Durchlasscharakteristik 82 eines Filters 51 und die kombinierte Empfindlichkeitskurve 83, die sich für eine zur Photodiode D1 identische Photodiode D2 mit vorgeschaltetem Filter 51 ergibt. Der Filter hat im gezeigten Beispiel einen Sperrbereich unterhalb der Grenzwellenlänge von 600 nm.

Figur 8.b) zeigt für denselben Wellenlängenbereich wie Fig. 8.a) eine Empfindlichkeitsverteilung 84, welche sich durch Differenzbildung aus der ungefilterten Empfindlichkeit und der mit vorgeschaltetem Filter erreichten Empfindlichkeit ergibt. Durch die so erzeugten erste Empfindlichkeitsverteilung 83 kann ein erster Wellenlängenbereich von ca. 600-900 nm ausgewählt werden und durch die zweite Empfindlichkeitsverteilung 84 kann ein erster Wellenlängenbereich von ca. 400-600 nm ausgewählt werden. Eine erste Strahlungsintensität kann also als Spannung an der Photodiode D2 gemessen werden und eine zweite Strahlungsintensität kann als Spannung an der Photodiode D1 gemessen werden. Mit der hier beschriebenen Konfiguration wird also im Fall eines Stickstoff-Plasmas eine erste und eine zweite Strahlungsintensität integral über eine Mehrzahl von Emissionslinien von Plasmaspezies gemessen.

Bezugszeichenliste

1 erste Elektrode
2 zweite Elektrode
3 Messkammer
4 Anschlussöffnung
5 Fenster
5' Fensterfläche (dem Probenraum zugewandt)
6 Wandung der Messkammer
7 elektrische Anschlüsse
8 Permanentmagnetanordnung
9 magnetisches Element
10 Drucksensor
20 Probenraum
20' Bereich des maximalen Leuchtens im Probenraum
21 elektromagnetische Strahlung eines ersten Wellenlängenbereichs
22 elektromagnetische Strahlung eines zweiten Wellenlängenbereichs
30 Miniaturspektrometer
31 erste Detektorelement
32 zweites Detektorelement
33, 34, 35, 36, 37, 38 weitere Detektorelemente
39 Detektorarray
41 Hochspannungsquelle
42 Stromstärkemessgerät

43 Platine (trägt Detektorelement)

44 Platine (trägt Spannungsversorgung)

51 Filter

52 Linse

53 Schlitz

54 optisches Gitter

81 Empfindlichkeit einer Photodiode

82 Durchlasscharakteristik eines Filters

83 erste Empfindlichkeitsverteilung

84 zweite Empfindlichkeitsverteilung

100 Verfahren zur Bestimmung eines Drucks

101 Verfahrensschritt Erzeugen eines Plasmas

102 Verfahrensschritt Messen einer Stromstärke

103 Verfahrensschritt Messen einer ersten Strahlungsintensität

104 Verfahrensschritt Messen einer zweiten Strahlungsintensität

105 Verfahrensschritt Bestimmen des Drucks

N, S Nord-/Südpole einer Permanentmagnetanordnung

I Intensität

I_1 erste Strahlungsintensität

I_2 zweite Strahlungsintensität

C_plasma Stromstärke durch das Plasma

N2, NI, NII, NIII Plasmaspezies von Stickstoff

p Druck

p0 Schätzwert für den Druck

W1, W1', W1" erster Wellenlängenbereich

W2, W2', W2" zweiter Wellenlängenbereich

λ Wellenlänge

START Anfangspunkt eines Verfahrens

ENDE Endpunkt eines Verfahrens

**Patentansprüche**

1. Verfahren (100) zur Bestimmung eines Drucks in einem Vakuumsystem, wobei das Verfahren folgende Schritte umfasst:

   a) Erzeugen (101) eines Plasmas in einem Probenraum (20), welcher mit dem Vakuumsystem fluiddynamisch verbunden ist und wobei das Plasma mit einer ersten Elektrode und einer zweiten Elektrode in elektrischem Kontakt steht;
   b) Messen (102) einer Stromstärke (C_plasma) eines elektrischen Stromes, der zwischen der ersten Elektrode und der zweiten Elektrode durch das Plasma hindurch fliesst;
   c) Messen (103) einer ersten Strahlungsintensität (I_1) von aus dem Plasma emittierter elektromagnetischer Strahlung eines ersten Wellenlängenbereichs, wobei der erste Wellenlängenbereich mindestens eine erste Emissionslinie einer ersten Plasmaspezies eines ersten chemischen Elements enthält;
   d) Messen (104) einer zweiten Strahlungsintensität (I_2) von aus dem Plasma emittierter elektromagnetischer Strahlung eines zweiten Wellenlängenbereichs, **dadurch gekennzeichnet, dass** der zweite Wellenlängenbereich eine zweite Emissionslinie der ersten Plasmaspezies des ersten chemischen Elements oder einer zweiten Plasmaspezies des ersten chemischen Elements enthält, und dass die zweite Emissionslinie ausserhalb des ersten Wellenlängenbereichs liegt; und
   e) Bestimmen (105) des Drucks (p) im Vakuumsystem als Funktion der gemessenen Stromstärke (C_plasma), der gemessenen ersten Strahlungsintensität (I_1) und der gemessenen zweiten Strahlungsintensität (I_2).

2. Verfahren (100) nach Anspruch 1, wobei im Schritt e) des Bestimmens (105) des Drucks im Vakuumsystem basierend auf der gemessenen ersten Strahlungsintensität und der gemessenen zweiten Strahlungsintensität ein Schätzwert (p0) des Drucks bestimmt wird, wobei ein Definitionsbereich einer Druck-Stromstärke-Kalibrationskurve auf einen Druckbereich eingeschränkt wird, der den Schätzwert enthält und in dem die Druck-Stromstärke-Kalibrationskurve monoton ist, und wobei basierend auf der Druck-Stromstärke-Kalibrationskurve im eingeschränkten Definitionsbereich und basierend auf der gemessenen Stromstärke, der Druck im Vakuumsystem bestimmt wird.

3. Verfahren (100) nach Anspruch 2, wobei ein Logarithmus des Schätzwerts (p0) des Drucks Anhand der Formel

$$\texttt{log( p0 ) = a (I\_1 / I\_2) + b}$$

bestimmt wird, wobei a und b vorab ermittelte Koeffizienten sind, welche von der Wahl der Emissionslinien, der verwendeten Anordnung zur Erzeugung des Plasmas und von der Basis des Logarithmus abhängen.

4. Vakuum-Drucksensor (10) umfassend:

- einen Probenraum (20), in dem ein Plasma erzeugt werden kann, wobei der Probenraum elektrischen Kontakt mit einer ersten Elektrode (1) und mit einer zweiten Elektrode (2) hat,
- ein Strommessgerät (42), welches elektrisch verbunden ist mit der ersten und mit der zweiten Elektrode und zum Probenraum in Serie geschaltet ist,
- ein wellenlängenselektives Element (51, 54), und
- ein erstes (31) und ein zweites Detektorelement (32) zum Messen einer Strahlungsintensität einer elektromagnetischen Strahlung,

wobei das wellenlängenselektive Element, das erste Detektorelement und das zweite Detektorelement so angeordnet sind, dass im ersten Detektorelement nur vom Probenraum ausgehende elektromagnetische Strahlung eines ersten Wellenlängenbereichs eintreffen kann und dass im zweiten Detektorelement nur vom Probenraum ausgehende elektromagnetische Strahlung eines zweiten Wellenlängenbereichs eintreffen kann,
wobei im ersten Wellenlängenbereich mindestens eine erste Emissionslinie einer ersten Plasmaspezies eines ersten chemischen Elements liegt,
**dadurch gekennzeichnet, dass** im zweiten Wellenlängenbereich eine zweite Emissionslinie der ersten Plasmaspezies des ersten chemischen Elements oder einer zweiten Plasmaspezies des ersten chemischen Elements liegt, und wobei die zweite Emissionslinie ausserhalb des ersten Wellenlängenbereichs liegt.

5. Vakuum-Drucksensor (10) nach Anspruch 4, umfassend eine Messkammer (3), welche den Probenraum umgibt, mit einem Fenster (5) in einer Wandung oder als Wandung der Messkammer, wobei das Fenster in einem optischen Wellenlängenbereich transparent ist und wobei ein durchgehender erster Strahlungspfad definiert ist, der ausgehend vom Probenraum das Fenster durchquert und im ersten Detektorelement endet und wobei ein durchgehender zweiter Strahlungspfad definiert ist, der ausgehend vom Probenraum das Fenster durchquert und im zweiten Detektorelement endet.

6. Vakuum-Drucksensor (10) nach einem der Ansprüche 4 oder 5, wobei das erste Detektorelement (31) und/oder das zweite Detektorelement (32) eine Photodiode, ein Phototransistor, ein Charge-Coupled-Device, ein Multi Channel Plate oder ein Channel Electron Multiplier ist.

7. Vakuum-Drucksensor (10) nach einem der Ansprüche 4 bis 6, wobei der Vakuum-Drucksensor ein Miniaturspektrometer (30) mit einem Detektorarray (39) umfasst und dass das erste Detektorelement (31) und das zweite Detektorelement (32) Elemente des Detektorarrays sind.

8. Vakuum-Drucksensor (10) nach einem der Ansprüche 4 bis 7, wobei der Vakuum-Drucksensor eine Vorrichtung (8) zur Erzeugung eines Magnetfeldes im Probenraum (20) umfasst.

9. Vakuum-Drucksensor (10) nach Anspruch 8, wobei die Anordnung von erster Elektrode (1), zweiter Elektrode (2) und der Vorrichtung (8) zur Erzeugung eines Magnetfeldes im Probenraum so ausgestaltet ist, dass durch Anlegen einer elektrischen Spannung an die Elektroden ein elektrisches Feld erzeugt werden kann, das im Probenraum im Wesentlichen senkrecht zum Magnetfeld ausgerichtet ist, insbesondere wobei die Anordnung als Magnetron-Anordnung, Invertierte-Magnetron-Anordnung oder Penning-Anordnung ausgestaltet ist.

10. Vakuum-Drucksensor (10) nach einem der Ansprüche 4 bis 9, weiter umfassend eine Energiequelle zur Zufuhr von Energie in ein Plasma im Probenraum.

11. Vakuum-Drucksensor (10) nach Anspruch 10, wobei die Energiequelle eine Hochspannungsquelle (41) umfasst, welche elektrisch leitend verbunden ist mit der ersten und der zweiten Elektrode und welche mit dem Strommessgerät in Serie geschaltet ist.

12. Vakuum-Drucksensor (10) nach Anspruch 10, wobei die Energiequelle eine Wechselstromquelle und eine Induktionsspule umfasst, wobei die Induktionsspule elektrisch mit der Wechselstromquelle verbunden ist und dazu ausgelegt ist, ein magnetisches Wechselfeld im Probenraum zu erzeugen, wenn die Induktionsspule von Wechselstrom durchflossen wird.

13. Vorrichtung zur Ausführung des Verfahrens nach einem der Ansprüche 1 bis 3, umfassend

    einen Vakuum-Drucksensor nach einem der Ansprüche 4 bis 12, und eine Verarbeitungseinheit,
    wobei die Verarbeitungseinheit mit dem Stromstärkemessgerät (42), dem ersten (31) und einen zweiten Detektorelement (32) für elektromagnetische Strahlung wirkverbunden ist zur Übertragung der gemessenen Stromstärke (C_plasma), der gemessenen ersten Strahlungsintensität (I_1) und der gemessenen zweiten Strahlungsintensität (I_2) und dazu ausgelegt ist, als deren Funktion den Druck (p) im Vakuumsystem zu bestimmen.

14. Anwendung des Verfahrens nach einem der Ansprüche 1 bis 3 zur Ausdehnung des Druckmessbereichs eines Vakuum-Drucksensors, der auf einer Messung einer Stromstärke durch ein Plasma beruht, insbesondere eines Vakuum-Drucksensors basierend auf dem Funktionsprinzip eines Kaltkathoden-Vakuummeters, auf einen Druckmessbereich, der sowohl Drücke unterhalb als auch Drücke oberhalb eines Extremwerts einer Druck-Stromstärke-Kennlinie des Vakuum-Drucksensors umfasst.

15. Verwendung eines Vakuum-Drucksensors (10) nach einem der Ansprüche 4 bis 12 in einem Verfahren nach einem der Ansprüche 1 bis 3.

**Claims**

1. Method (100) for determining a pressure in a vacuum system, wherein the method comprises the steps of:

    a) generating (101) a plasma in a sample chamber (20) which is fluid-dynamically connected to the vacuum system and wherein the plasma is in electrical contact with a first electrode and a second electrode;
    b) measuring (102) a current intensity (C_plasma) of an electrical current flowing through the plasma between the first electrode and the second electrode;
    c) measuring (103) a first radiation intensity (I_1) of electromagnetic radiation of a first wavelength range which is emitted from the plasma, wherein the first wavelength range contains at least a first emission line of a first plasma species of a first chemical element;
    d) measuring (104) a second radiation intensity (I_2) of electromagnetic radiation of a second wavelength range, which is emitted from the plasma, wherein the second wavelength range contains a second emission line of the first plasma species of the first chemical element or of a second plasma species of the first chemical element, and wherein the second emission line lies outside the first wavelength range; and
    e) determining (105) the pressure (p) in the vacuum system as a function of the measured current intensity (C_plasma), the measured first radiation intensity (I_1) and the measured second radiation intensity (I_2).

2. Method (100) according to claim 1, wherein in step e) of determining (105) the pressure in the vacuum system, based on the measured first radiation intensity and the measured second radiation intensity, an estimated value (p0) of the pressure is determined, wherein a definition range of a pressure-current intensity calibration curve is restricted to a pressure range which contains the estimated value and in which the pressure-current intensity calibration curve is monotonic, and wherein based on the pressure-current intensity calibration curve in the restricted definition range and based on the measured current intensity, the pressure in the vacuum system is determined.

3. Method (100) according to claim 2, wherein a logarithm of the estimated value (p0) of the pressure is determined using the formula

$$\log(p0) = a\ (I\_1\ /\ I\_2) + b,$$

wherein a and b are pre-determined coefficients that depend on the choice of emission lines, the arrangement used to generate the plasma, and the basis of the logarithm.

4. Vacuum pressure sensor (10), comprising:

- a sample chamber (20) in which a plasma can be generated, wherein the sample chamber has electrical contact with a first electrode (1) and with a second electrode (2),
- a current measuring device (42) electrically connected to the first and to the second electrodes and connected in series with the sample chamber,
- a wavelength-selective element (51, 54), and
- a first (31) and a second detector element (32) for measuring a radiation intensity of an electromagnetic radiation,

wherein the wavelength-selective element, the first detector element and the second detector element are arranged such that in the first detector element only electromagnetic radiation of a first wavelength range emanating from the sample chamber can arrive, and that in the second detector element only electromagnetic radiation of a second wavelength range emanating from the sample chamber can arrive, wherein at least a first emission line of a first plasma species of a first chemical element lies in the first wavelength range, wherein a second emission line of the first plasma species of the first chemical element or of a second plasma species of the first chemical element lies in the second wavelength range, and wherein the second emission line lies outside the first wavelength range.

5. Vacuum pressure sensor (10) according to claim 4, comprising a measurement chamber (3) surrounding the sample chamber, having a window (5) in a wall or as a wall of the measurement chamber, wherein the window is transparent in an optical wavelength range and wherein a continuous first radiation path is defined which, starting from the sample chamber, traverses the window and ends in the first detector element and wherein a continuous second radiation path is defined which, starting from the sample chamber, traverses the window and ends in the second detector element.

6. Vacuum pressure sensor (10) according to one of claims 4 or 5, wherein the first detector element (31) and/or the second detector element (32) is a photodiode, a phototransistor, a charge coupled device, a multi-channel plate, or a channel electron multiplier.

7. Vacuum pressure sensor (10) according to one of claims 4 to 6, wherein the vacuum pressure sensor comprises a miniature spectrometer (30) having a detector array (39) and that the first detector element (31) and the second detector element (32) are elements of the detector array.

8. Vacuum pressure sensor (10) according to one of claims 4 to 7, wherein the vacuum pressure sensor comprises a device (8) for generating a magnetic field in the sample chamber (20).

9. Vacuum pressure sensor (10) according to claim 8, wherein the arrangement of first electrode (1), second electrode (2) and the device (8) for generating a magnetic field in the sample chamber is designed such that by applying an electric voltage to the electrodes an electric field can be generated which is aligned in the sample chamber substantially perpendicular to the magnetic field, in particular wherein the arrangement is designed as a magnetron array, inverted magnetron array or Penning array.

10. Vacuum pressure sensor (10) according to one of claims 4 to 9, further comprising an energy source for supplying energy to a plasma in the sample chamber.

11. Vacuum pressure sensor (10) according to claim 10, wherein the power source comprises a high-voltage source (41) which is electrically conductively connected to the first and second electrodes and which is connected in series to the current measuring device.

12. Vacuum pressure sensor (10) according to claim 10, wherein the power source comprises an AC power source and an induction coil, wherein the induction coil is electrically connected to the AC power source and adapted to generate an alternating magnetic field in the sample chamber when AC power is passed through the induction coil.

13. Device for carrying out the method according to one of claims 1 to 3, comprising

a vacuum pressure sensor according to one of claims 4 to 12, and a processing unit,

wherein the processing unit is operatively connected to the current intensity measuring device (42), the first (31) and a second detector element (32) for electromagnetic radiation for transmitting the measured current intensity (C_plasma), the measured first radiation intensity (I_1) and the measured second radiation intensity (I_2), and is adapted to determine as a function thereof the pressure (p) in the vacuum system.

14. Application of the method according to one of claims 1 to 3 for extending the pressure measurement range of a vacuum pressure sensor based on a measurement of a current intensity by a plasma, in particular a vacuum pressure sensor based on the operating principle of a cold cathode vacuum gauge, to a pressure measurement range comprising both pressures below and pressures above an extreme value of a pressure-current intensity characteristic curve of the vacuum pressure sensor.

15. Use of a vacuum pressure sensor (10) according to one of claims 4 to 12 in a method according to one of claims 1 to 3.

**Revendications**

1. Procédé (100) de détermination d'une pression dans un système à vide, dans lequel le procédé comprend les étapes suivantes :

    a) génération (101) d'un plasma dans une zone d'échantillonnage (20), qui est reliée par dynamique de fluide au système à vide, le plasma se trouvant en contact électrique avec une première électrode et une seconde électrode ;
    b) mesure (102) d'une intensité de courant (C_plasma) d'un courant électrique qui parcourt le plasma entre la première électrode et la seconde électrode ;
    c) mesure (103) d'une première intensité de rayonnement (I_1) du rayonnement électromagnétique, émis depuis le plasma, d'une première gamme de longueurs d'onde, la première gamme de longueurs d'onde contenant au moins une première raie d'émission d'un premier type de plasma d'un premier élément chimique ;
    d) mesure (104) d'une seconde intensité de rayonnement (1_2) du rayonnement électromagnétique, émis depuis le plasma, d'une seconde gamme de longueurs d'onde, **caractérisé en ce que** la seconde gamme de longueurs d'onde contient une seconde raie d'émission du premier type de plasma du premier élément chimique ou d'un second type de plasma du premier élément chimique, et **en ce que** la seconde raie d'émission repose en-dehors de la première gamme de longueurs d'onde ; et
    e) détermination (105) de la pression (p) dans le système à vide en tant que fonction de l'intensité de courant mesurée (C_plasma), de la première intensité de rayonnement mesurée (I_1) et de la seconde intensité de rayonnement mesurée (I_2).

2. Procédé (100) selon la revendication 1, dans lequel, à l'étape e) de la détermination (105) de la pression dans le système à vide sur la base de la première intensité de rayonnement mesurée et de la seconde intensité de rayonnement mesurée, on détermine une valeur estimée (p0) de la pression, dans lequel on restreint une plage de définition d'une courbe d'étalonnage pression-intensité de courant à une plage de pressions qui contient la valeur estimée et dans laquelle la courbe d'étalonnage pression-intensité de courant est monotone, et dans lequel, sur la base de la courbe d'étalonnage pression-intensité de courant dans la plage de définition restreinte et sur la base de l'intensité de courant mesurée, on détermine la pression dans le système à vide.

3. Procédé (100) selon la revendication 2, dans lequel on détermine un logarithme de la valeur estimée (p0) de la pression au moyen de la formule

$$\log(p0) = a \ (I\_1 \ / \ I\_2) + b$$

dans laquelle a et b sont des coefficients préalablement déterminés qui dépendent du choix des raies d'émission, de l'agencement utilisé pour générer le plasma et de la base du logarithme.

4. Capteur de pression sous vide (10) comprenant :

    - une zone d'échantillonnage (20) dans laquelle un plasma peut être généré, la zone d'échantillonnage ayant un contact électrique avec une première électrode (1) et avec une seconde électrode (2),
    - un ampèremètre (42) qui est électriquement relié à la première et à la seconde électrode et est connecté en série à la zone d'échantillonnage,
- un élément sélectif de longueur d'onde (51, 54), et
- un premier (31) et un second (32) éléments détecteurs permettant de mesurer une intensité de rayonnement d'un rayonnement électromagnétique,

dans lequel l'élément sélectif de longueur d'onde, le premier élément détecteur et le second élément détecteur sont agencés de façon telle que seul un rayonnement électromagnétique d'une première gamme de longueurs d'onde, sortant de la zone d'échantillonnage, peut arriver dans le premier élément détecteur, et de façon telle que seul un rayonnement électromagnétique d'une seconde gamme de longueurs d'onde, sortant de la zone d'échantillonnage, peut arriver dans le second élément détecteur, dans lequel se trouve dans la première gamme de longueurs d'onde au moins une première raie d'émission d'un premier type de plasma d'un premier élément chimique, **caractérisé en ce qu'**une seconde raie d'émission du premier type de plasma du premier élément chimique ou d'un second type de plasma du premier élément chimique se trouve dans la seconde gamme de longueurs d'onde, et la seconde raie d'émission se trouvant en-dehors de la première gamme de longueurs d'onde.

5. Capteur de pression sous vide (10) selon la revendication 4, comprenant une chambre de mesure (3) qui ceinture la zone d'échantillonnage, une fenêtre (5) dans une paroi ou en tant que paroi de la chambre de mesure, dans lequel la fenêtre est transparente dans une gamme de longueurs d'onde optiques, et dans lequel est définie une première trajectoire de rayonnement traversante qui, en partant de la zone d'échantillonnage, traverse la fenêtre et se termine dans le premier élément détecteur, et dans lequel est définie une seconde trajectoire de rayonnement traversante qui, en partant de la zone d'échantillonnage, traverse la fenêtre et se termine dans le second élément détecteur.

6. Capteur de pression sous vide (10) selon l'une des revendications 4 ou 5, dans lequel le premier élément détecteur (31) et/ou le second élément détecteur (32) est/sont une photodiode, un phototransistor, un dispositif à couplage de charge, une plaque à canaux multiples ou un multiplicateur électronique multi-canaux.

7. Capteur de pression sous vide (10) selon l'une des revendications 4 à 6, dans lequel le capteur de pression sous vide comprend un spectromètre miniature (30) comportant une mosaïque de détecteurs (39), et dans lequel le premier élément détecteur (31) et le second élément détecteur (32) sont des éléments de la mosaïque de détecteurs.

8. Capteur de pression sous vide (10) selon l'une des revendications 4 à 7, dans lequel le capteur de pression sous vide comporte un dispositif (8) permettant de générer un champ magnétique dans la zone d'échantillonnage (20).

9. Capteur de pression sous vide (10) selon la revendication 8, dans lequel l'agencement de la première électrode (1), de la seconde électrode (2) et du dispositif (8) de génération d'un champ magnétique sont agencés dans la zone d'échantillonnage de façon telle qu'il est possible, par application d'une tension électrique au niveau des électrodes, de générer un champ électrique qui est orienté, dans la zone d'échantillonnage, essentiellement perpendiculairement au champ magnétique, en particulier dans lequel l'agencement est réalisé en tant qu'agencement à magnétron, agencement à magnétron inversé ou système de Penning.

10. Capteur de pression sous vide (10) selon l'une des revendications 4 à 9, comprenant en outre une source d'énergie permettant d'amener de l'énergie dans un plasma de la zone d'échantillonnage.

11. Capteur de pression sous vide (10) selon la revendication 10, dans lequel la source d'énergie comporte une source haute tension (41) qui est reliée de façon électriquement conductrice à la première et à la seconde électrodes et qui est commutée en série avec l'ampèremètre.

12. Capteur de pression sous vide (10) selon la revendication 10, dans lequel la source d'énergie comporte une source de courant alternatif et une bobine d'induction, dans lequel la bobine d'induction est reliée électriquement à la source de courant alternatif et est conçue pour générer un champ alternatif magnétique dans la zone d'échantillonnage lorsque la bobine d'induction est parcourue par un courant alternatif.

13. Dispositif de réalisation du procédé selon l'une des revendications 1 à 3, comprenant un capteur de pression sous vide selon l'une des revendications 4 à 12, et une unité de traitement, dans lequel l'unité de traitement est fonctionnellement reliée à l'ampèremètre (42), au premier (31) et au second (32) élément détecteur d'un rayonnement électromagnétique pour transmettre l'intensité de courant mesurée (C_plasma), la première intensité de rayonnement mesurée (I_1) et la seconde intensité de rayonnement mesurée (I_2), et est conçue pour déterminer, en fonction de celles-ci, la pression (p) dans un système à vide.

14. Utilisation du procédé selon l'une des revendications 1 à 3 pour étendre la plage de mesure de pression d'un capteur de pression sous vide, qui repose sur la mesure d'une intensité de courant par un plasma, en particulier d'un capteur de pression sous vide sur la base du principe de fonctionnement d'un manomètre à vide à cathode froide, à une plage de mesure de pression qui comprend tant des pressions inférieures que des pressions supérieures à une valeur extrême d'une courbe caractéristique pression-intensité de courant du capteur de pression sous vide.

15. Utilisation d'un capteur de pression sous vide (10) selon l'une des revendications 4 à 12 dans un procédé selon l'une des revendications 1 à 3.

100

START

101

102

C_plasma

103

I_1

104

I_2

105 :   p = f( C_plasma, I_1, I_2 )

ENDE

Fig. 1

10

20

2

1

42

A

22

51

21

21

31

32

Fig. 2

Fig. 3

Fig. 4

Fig. 5.a)

Fig. 5.b)

Fig. 5.c)

Fig. 5.d)

Fig. 6

Fig. 7

Fig. 8.a)

Fig. 8.b)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 716712
- US 6351131 B1
- CH 707685 A1

**In der Beschreibung aufgeführte Nicht-Patentliteratur**

- **REDHEAD, P, A**. The magnetron gauge, a cold cathode vacuum gauge. *Can. J. Phys.*, 1959, vol. 37, 1260-1271